# EUROPÄISCHE PATENTSCHRIFT

(11) **EP 3 196 083 B1**
(45) Veröffentlichungstag und Bekanntmachung des Hinweises auf die Patenterteilung: **05.05.2021**
(21) Anmeldenummer: 17151541.4
(22) Anmeldetag: 16.01.2017
(51) Int. Cl.: B60T 7/22

(54) **VERFAHREN UND STEUERVORRICHTUNG FÜR EINE SELBSTBREMSUNG EINES KRAFTFAHRZEUGS**
METHOD AND CONTROL SYSTEM FOR SELF- BRAKING OF A MOTOR VEHICLE
PROCÉDÉ ET DISPOSITIF DE COMMANDE POUR UN DISPOSITIF D'AUTOFREINAGE D'UN VÉHICULE AUTOMOBILE

(30) Priorität: 21.01.2016 DE 102016200853
(43) Veröffentlichungstag der Anmeldung: 26.07.2017
(73) Patentinhaber: VOLKSWAGEN AKTIENGESELLSCHAFT, 38440 Wolfsburg (DE)
(72) Erfinder: Blumentritt, Marc, 38102 Braunschweig (DE)

(56) Entgegenhaltungen:
- EP-A1- 1 095 833
- EP-A1- 2 902 279
- DE-A1- 10 118 707
- DE-A1- 10 220 567
- DE-A1- 10 325 266
- DE-A1-102004 057 603
- US-A1- 2014 067 220

## Beschreibung

Die Erfindung betrifft eine Steuervorrichtung und ein Verfahren zum Steuern einer Selbstbremsung eines Kraftfahrzeugs. Die Selbstbremsung kann in bekannter Weise durch eine Kollisionsdetektionseinrichtung initiiert werden, welche eine bevorstehende Kollision des Kraftfahrzeugs prädiziert und daraufhin bei einem Bremssystem des Kraftfahrzeugs eine Betätigung von Radbremsen anfordert. Zu der Erfindung gehört auch ein Kraftfahrzeug mit der erfindungsgemäßen Steuervorrichtung.

Durch das erfindungsgemäße Verfahren ist somit eine Notbremsassistenz realisiert. Notbremsassistenten fordern von Bremssystemen die Umsetzung von starken Verzögerungen (negative Beschleunigung) für eine Notbremsung oder Selbstbremsung an, wenn der Fahrer des Kraftfahrzeugs nicht oder nicht mit ausreichender Bremskraft auf ein detektiertes Objekt in der Fahrzeugumgebung reagiert. Jedes Bremssystem hat aber zu Beginn des Aufbaus einer Fahrzeugverzögerung eine Totlaufzeit. Um diese Totlaufzeit zu reduzieren, kann ein Notbremsassistent bereits vor der Anforderung der eigentlichen Selbstbremsung eine Vorbereitung beziehungsweise Konditionierung des Bremssystems anfordern, damit dieses anschließend mit möglichst kurzer Totlaufzeit auf die Bremsanforderung reagiert. Beispielsweise können Bremsbeläge näher an die Bremsscheibe positioniert und dort gehalten werden. Durch die Konditionierung wird das Bremssystem aus seinem Bereitschaftszustand in einen aktiven Zustand überführt.

Der wesentliche Nachteil dieser Vorgehensweise ist, dass die Totlaufzeit von Bremssystemen auf Bremsanforderungen je nach verwendeter Technologie unterschiedlich groß ist. Um den idealen Zeitpunkt der Vorbereitung des Bremssystems zu bestimmen, muss die Notbremsassistenz somit ein tiefgehendes Verständnis vom Bremssystem selber haben. Dies ist in der Praxis aber normalerweise nicht der Fall, da in einem Kraftfahrzeug Bremssysteme von unterschiedlichen Herstellern eingebaut sein können. Daher kann in bisherigen Lösungen innerhalb eines Notbremsassistenten die Vorhersage des Zeitpunkts zur optimalen Vorbereitung des Bremssystems nur ungenau sein, was zu Verlusten bei Bremswegen oder zu voreiligen Bremseingriffen führen kann.

Aus dem Stand der Technik sind Kollisionsdetektionseinrichtungen beispielsweise aus der DE 10 2010 049 351 A1 bekannt. Die darin beschriebene Bremsassistenzvorrichtung zur Kollisionsdetektion stellt eine Assistenzfunktion bei ausbleibender Fahreraktivität und in Abhängigkeit eines Abstands zwischen dem Kraftfahrzeug und einem sich vor dem Kraftfahrzeug befindenden Objekt bereit. Die Bremsassistenzvorrichtung kann über einen CAN-Bus (CAN - Controller Area Network) mit einem Bremssystem gekoppelt sein, um an dieses einen Verzögerungswunsch auszusenden. Dieser löst einen Bremseingriff des Bremssystems aus.

Aus der WO 2011/069489 A1 ist ein Notbremsassistenzsystem zur Unterstützung eines Fahrers beim Anfahren bekannt. Eine Erkennungseinheit ermittelt aus Daten einer Umfeldsensorik eine Zeit bis zur Kollision, die sogenannte TTC (Time To Collision), sowie eine Zeit bis zum notwendigen Beginn eines erforderlichen Bremsmanövers, die sogenannte TTB (Time To Break), um eine drohende Kollision mit dem vorausfahrenden Fahrzeug zu vermeiden. Daraus kann für einen autonomen, schnellen und zeitlich begrenzten Bremseingriff durch ein elektronisches Bremssystem ein entsprechendes Bremseingriffssignal erzeugt und an das Bremssystem ausgegeben werden.

In dem Dokument US 2014/067220 A1 ist ein Verfahren beschrieben, bei welchem für das Auslösen eines Bremsvorgangs eine Totlaufzeit berücksichtigt wird, die das Bremssystem aufweist. Ein Zeitpunkt für eine Bremsanforderung für eine automatische Notbremsung wird dann derart berechnet, dass auch diese Totlaufzeit in Kombination mit der noch verbleibenden Zeit bis zur Kollision berücksichtigt ist. Um die Totlaufzeit zu verkürzen, kann das Bremssystem auf ein Bremsmanöver vorbereitet werden.

Aus dem Dokument DE 102 20 567 A1 ist bekannt, bei einer voraussichtlich anstehenden automatisierten Notbremsung die Bremsbeläge bereits an die Bremsscheiben heranzuführen und dort warm-reiben zu lassen, um dann bei einem tatsächlich benötigten Bremsmanöver das Lüftspiel bereits überwunden zu haben.

In dem Dokument DE 10 2004 057 603 A1 ist beschrieben, bei einer Fahrsituation, in welcher eine Notbremsung möglich werden könnte, das Lüftspiel an den Bremsbelegen durch Erhöhen des Drucks im Hauptzylinder zu überwinden und die Bremsbeläge schleifend an der Bremsscheibe anliegend zu lassen, um dann im Falle einer Notbremsung sofort eine Bremswirkung erzielen zu können.

Aus dem Dokument DE 101 18 707 A1 ist ein Verfahren zur Kollisionsverhinderung bei Kraftfahrzeugen bekannt, bei welchem ein Befehl zum Vorspannen der Bremsanlage in Abhängigkeit von einer errechneten Kollisionswahrscheinlichkeit erzeugt wird. Hierdurch wird die Reaktionszeit der Bremsanlage verkürzt.

Aus den Dokument EP 1 095 833 A1 ist im Zusammenhang mit einer Abstandsregelung bekannt, mittels eines Bremsbereitschaftssignals eine Bremsanlage in einen Bereitschaftszustand zu bringen, in welchem das Lüftspiel von Reibbremsen überwunden ist.

In den Dokumenten EP 2 902 279 A1 und DE 103 25 266 A1 ist beschrieben, dass vor einem möglichen automatisierten Bremseingriff das Lüftspiel bereits überwunden werden sollte, damit ein Bremssystem ohne nennenswerte Totzeit auf den automatisierten Bremseingriff reagieren kann.

Der Erfindung liegt die Aufgabe zugrunde, bei einer Selbstbremsung in dem Zusammenspiel einer Kollisionsdetektionseinrichtung und einem Bremssystem den Einfluss der Totlaufzeit des Bremssystems zu verringern.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Durch die Erfindung ist ein Verfahren zum Steuern einer Notbremsung oder Selbstbremsung eines Kraftfahrzeugs bereitgestellt. Durch das Verfahren wird ein Zusammenspiel zwischen einer Kollisionsdetektionseinrichtung und einem Bremssystem des Kraftfahrzeugs koordiniert. Bei dem Verfahren prädiziert die Kollisionsdetektionseinrichtung eine bevorstehende Kollision des Kraftfahrzeugs und ermittelt für die Selbstbremsung einen Bremszeitpunkt, der hier als TTB-Bremszeitpunkt bezeichnet ist (TTB - Time To Break). Zum TTB-Bremszeitpunkt soll die Selbstbremsung beginnen, also nach Möglichkeit für die Selbstbremsung das erste Mal ein Bremsmoment an Rädern des Kraftfahrzeugs erzeugt werden. Das Bremssystem wird in einem Bereitschaftszustand betrieben, in welchem es auf eine Bremsanforderung des Kollisionsdetektionseinrichtung mit einer Betätigung von Radbremsen des Kraftfahrzeugs reagiert. Die Bremsanforderung kann beispielsweise eine Soll-Verzögerung, das heißt eine negative Soll-Beschleunigung, vorgeben, die mittels der Radbremsen durch das Bremssystem bewirkt werden soll. Zum Übertragen der Bremsanforderung von der Kollisionsdetektionseinrichtung zu dem Bremssystem können diese beiden Einrichtungen beispielsweise über einen Kommunikationsbus, beispielsweise einen CAN-Bus, gekoppelt sein.

Der besagte Bereitschaftszustand ist der normale Betriebszustand, den das Bremssystem nach dem Einschalten des Kraftfahrzeugs aufweist. Um ausgehend vom Bereitschaftszustand das erste Mal ein Bremsmoment erzeugen zu können, benötigen das Bremssystem eine Totlaufzeit, um für die durch die Bremsanforderung angeforderte Selbstbremsung zum ersten Mal ein Bremsmoment mittels der Radbremse zu erzeugen.

Um diese Totlaufzeit zu berücksichtigen, wird erfindungsgemäß ein Zeitdauerwert der Totlaufzeit des Bremssystems in dem Kraftfahrzeug bereitgestellt. Mit anderen Worten wird zu dem tatsächlich im Kraftfahrzeug eingebauten Bremssystem eine Zeitangabe in Form des Zeitdauerwerts beispielsweise als digitaler Wert bereitgestellt. Ausgehend von dem Bereitschaftszustand des Bremssystems werden die Radbremsen bei Erkennen der bevorstehenden Kollision dann nicht erst zum TTB-Bremszeitpunkt betätigt, sondern schon vorher zu einem Startzeitpunkt, der dem TTB-Bremszeitpunkt abzüglich des Zeitdauerwerts der Totlaufzeit entspricht. Durch das erfindungsgemäße Verfahren wird also mit dem Betätigen der Radbremsen also nicht erst zum TTB-Bremszeitpunkt begonnen, sondern schon vorher zum Startzeitpunkt, sodass die Radbremsen ausgehend von dem Bereitschaftszustand aktiviert oder betätigt werden. Da hierbei zunächst die Totlaufzeit benötigt wird, um überhaupt das erste Mal ein Bremsmoment an den Radbremsen zu erzeugen, ergibt sich durch die beschriebene Festlegung des Startzeitpunkts, dass zum TTB-Bremszeitpunkt tatsächlich das erste Mal ein Bremsmoment durch die Radbremsen erzeugt wird. So kann auf Grundlage des erfindungsgemäßen Verfahrens der Einfluss der Totlaufzeit vollständig kompensiert oder vermieden werden.

Die Erfindung bewirkt hierbei, dass die Bremsbeläge zum TTB-Bremszeitpunkt in Bewegung gehalten werden. Dann fällt in vorteilhafter Weise auch diejenige Zeit weg, die zum Beschleunigen der Bremsbeläge nötig ist, um die Anpresskraft der Bremsbeläge an die Bremsscheiben zu erhöhen.

Zu der Erfindung gehören auch optionale Weiterbildungen, durch deren Merkmale sich zusätzliche Vorteile ergeben.

Zwei Weiterbildungen betreffen die Frage, welche der beiden Einrichtungen, die Kollisionsdetektionseinrichtung oder das Bremssystem, den Zeitdauerwert der Totlaufzeit berücksichtigt. Eine dieser Weiterbildungen sieht vor, dass die Selbstbremsung gestartet wird, indem die Kollisionsdetektionseinrichtung ihre Bremsanforderung zum Startzeitpunkt aussendet. Hier berücksichtigt also die Kollisionsdetektionseinrichtung den Zeitdauerwert, indem nicht erst zum TTB-Bremszeitpunkt die Bremsanforderung an das Bremssystem ausgesendet wird, sondern schon früher zum Startzeitpunkt. Hierdurch ergibt sich der Vorteil, dass das Bremssystem zum Durchführen des erfindungsgemäßen Verfahrens nicht spezifisch ausgestaltet sein muss, sondern in der an sich bekannten Weise ausgehend von dem Bereitschaftszustand auf die Bremsanforderung durch das Aktivieren der Radbremsen reagieren kann, wobei es dann die Totlaufzeit benötigen darf, da ja die Bremsanforderung schon vor dem eigentlichen TTB-Bremszeitpunkt zum Startzeitpunkt eingetroffen ist.

Die alternative Weiterbildung hierzu sieht vor, dass die Selbstbremsung gestartet wird, indem die Kollisionsdetektionseinrichtung vor der eigentlichen Bremsanforderung den TTB-Bremszeitpunkt an das Bremssystem signalisiert und das Bremssystem selbst den Startzeitpunkt ermittelt und dann zum Startzeitpunkt die Radbremsen ohne die Bremsanforderung zu betätigen beginnt. Mit anderen Worten informiert die Kollisionsdetektionseinrichtung das Bremssystem darüber, wann die nächste Bremsanforderung kommen wird. Bei dieser Weiterbildung ergibt sich der Vorteil, dass das Bremssystem selbst seine eigene Totlaufzeit berücksichtigen kann. Hierdurch kann beispielsweise auch auf einen aktuellen Betriebszustand des Bremssystems, welcher auf den Zeitdauerwert der Totlaufzeit Einfluss hat, berücksichtigt werden.

Zu dieser Weiterbildung gibt es eine zusätzliche Ausgestaltung, die berücksichtigt, dass unter Umständen die Bremsanforderung ausbleibt, weil die Kollisionsdetektionseinrichtung beispielsweise erkannt hat, dass keine Selbstbremsung mehr nötig ist. Bei dieser Weiterbildung bricht das Bremssystem die Selbstbremsung bei Ausbleiben der Bremsanforderung zum TTB-Bremszeitpunkt ab. Somit ist verhindert, dass ein Bremsmoment durch das Bremssystem erzeugt wird, obwohl keine Bremsanforderung vorliegt.

Wie bereits ausgeführt, handelt es sich bei der Totlaufzeit um diejenige Phase, während welcher das Bremssystem vom Bereitschaftszustand in den Zustand überführt wird, in welchem tatsächlich ein Bremsmoment an den Rädern des Kraftfahrzeugs durch die Radbremsen erzeugt wird. Im Bereitschaftszustand können beispielsweise Bremsklötze oder Bremsbeläge der Radbremsen in einer Ruhestellung angeordnet sein. Ausgehend von dieser Ruhestellung werden die Bremsbeläge dann während der Totlaufzeit beispielsweise an eine jeweilige Bremsscheibe heranbewegt oder auf sie zu beschleunigt. Die Totlaufzeit ist dann zu Ende beziehungsweise das Reibmoment wird dann erzeugt, wenn die Bremsbeläge die Bremsscheibe erreichen oder berühren. Mit anderen Worten werden gemäß einer Ausführungsform der Erfindung während der Totlaufzeit Bremsbeläge der Radbremsen aus einer Ruhestellung heraus auf Bremsscheiben der Radbremsen zu beschleunigt.

Eine Weiterbildung der Erfindung sieht vor, dass während der Totlaufzeit eine Pumpe zum Bereitstellen eines Bremsdrucks für die Selbstbremsung anläuft. Zusätzlich oder alternativ dazu ist vorgesehen, einen Bremskolben eines elektro-mechanischen Bremskraftverstärkers zu beschleunigen. Hierdurch verringert sich in vorteilhafter Weise die Ansprechzeit oder beziehungsweise es vergrößert sich die Druckaufbaugeschwindigkeit, mit welcher der Bremsdruck durch das Bremssystem vergrößert wird, um die Selbstbremsung durchzuführen.

In Bezug auf die eigentliche Vorhersage des TTB-Bremszeitpunkts sieht eine Weiterbildung vor, dass durch die Kollisionsdetektionseinrichtung auf der Grundlage einer digitalen Umfeldkarte ein Kollisionszeitpunkt der Kollision prädiziert oder vorausgesagt wird. Dieser Kollisionszeitpunkt wird hier als TOC-Kollisionszeitpunkt (TOC - Time To Collision) bezeichnet, wie es im Stand der Technik üblich ist. Aus dem TOC-Kollisionszeitpunkt wird der TTB-Bremszeitpunkt als derjenige Zeitpunkt ermittelt, zu welchem spätestens die Selbstbremsung beginnen muss, also das erste Mal ein Bremsmoment durch das Bremssystem erzeugt werden muss, um die Kollision durch die Selbstbremsung zu vermeiden oder zumindest auf ein vorbestimmtes Schadensmaß zu begrenzen, indem z.B. eine vorbestimmte Höchstgeschwindigkeit unterschritten ist. Beispielsweise kann durch die Kollisionsdetektionseinrichtung prädiziert werden, dass eine Kollision in zwei Sekunden erfolgt. Dann kann als TTB-Bremszeitpunkt beispielsweise die aktuelle Zeit plus eine Sekunde festgelegt werden. Beträgt die Totlaufzeit 700 Millisekunden, so ist es durch das erfindungsgemäße Verfahren dann möglich, ausgehend vom aktuellen Zeitpunkt nach 300 Millisekunden die Radbremsen zu betätigen, sodass sie tatsächlich nach einer Sekunde, also zum TTB-Bremszeitpunkt zum ersten Mal für dieses Bremsmanöver ein Bremsmoment erzeugen.

Wie bereits ausgeführt, gehört zu der Erfindung auch eine Steuervorrichtung für ein Kraftfahrzeug, mittels welcher eine Ausführungsform des erfindungsgemäßen Verfahrens durchgeführt werden kann. Die Steuervorrichtung ist dazu eingerichtet, für eine Selbstbremsung aus einem TTB-Bremszeitpunkt und einem Zeitdauerwert einer Totlaufzeit eines Bremssystems des Kraftfahrzeugs einen Startzeitpunkt zu ermitteln, ab welchem das Bremssystem aus einem Bereitschaftszustand heraus (Bremsbeläge in der Ruhestellung und/oder Pumpe zum Bereitstellen eines Bremsdrucks deaktiviert oder im Ruhezustand und/oder Bremskolben des Bremskraftverstärkers in Ruhe) Radbremsen des Kraftfahrzeugs betätigt. Die Steuervorrichtung ist des Weiteren dazu eingerichtet, die Radbremsen schon ab dem Startzeitpunkt zu betätigen, also nicht erst zum TTB-Bremszeitpunkt, sodass die Radbremsen zum TTB-Bremszeitpunkt gerade beginnen, ein Bremsmoment zu erzeugen und dabei auch schon dynamisch in Bewegung sind. Die Steuervorrichtung ist dazu eingerichtet, eine Ausführungsform des erfindungsgemäßen Verfahrens durchzuführen.

Schließlich gehört zu der Erfindung auch ein Kraftfahrzeug mit einem Bremssystem und einer Kollisionsdetektionseinrichtung. Das Bremssystem und die Kollisionsdetektionseinrichtung können dem Grunde nach auf einer entsprechenden Einrichtung aus dem Stand der Technik beruhen. Erfindungsgemäß sind das Bremssystem und/oder die Kollisionsdetektionseinrichtung dahingehend weitgebildet, dass durch sie eine Steuervorrichtung gemäß der Erfindung bereitgestellt ist. Es wird also in der beschriebenen Weise entweder durch die Kollisionsdetektionseinrichtung oder das Bremssystem (oder auch durch eine Kombination der beiden) auf Grundlage eines Zeitdauerwerts der Totlaufzeit ein Zeitstartpunkt zum Betätigen der Radbremsen ermittelt und es werden bei einer prädizierten Kollision schon zum Startzeitpunkt anstatt erst zum TTB-Bremszeitpunkt die Radbremsen für die Selbstbremsung aktiviert.

Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs und
- Fig. 2: ein Diagramm mit schematisierten zeitlichen Verläufen einer Fahrzeugverzögerung, wie sie sich durch eine Selbstbremsung bei dem Kraftfahrzeug von Fig. 1 ergeben kann.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

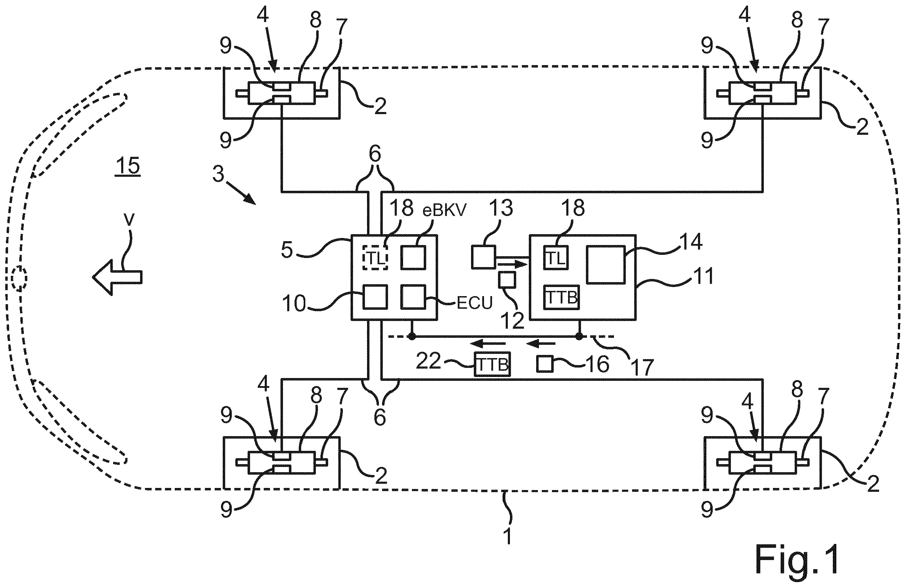

Fig. 1 zeigt ein Kraftfahrzeug 1, bei dem es sich beispielsweise um einen Kraftwagen, insbesondere einen Personenkraftwagen oder Lastkraftwagen, handeln kann. Das Kraftfahrzeug 1 kann Räder 2 aufweisen, an welchen durch ein Bremssystem 3 ein Bremsmoment zur Verringerung einer Fahrgeschwindigkeit V des Kraftfahrzeugs 1 erzeugt werden kann. Das Bremssystem 3 kann hierzu Radbremsen 4 aufweisen. Des Weiteren kann das Bremssystem 3 beispielsweise eine Steuereinheit 5 mit einem Bremssteuergerät ECU und einem elektronischen Bremskraftverstärker eBKV aufweisen. Das Bremssteuergerät ECU kann beispielsweise den elektronischen Bremskraftverstärker eBKV der Steuereinheit 5 steuern, um hierdurch den hydraulischen Bremsdruck in den Bremskreisläufen 6 einzustellen. Zum Erzeugen des Bremsdruckes kann die Steuereinheit 5 beispielsweise eine Hydraulikpumpe 10 umfassen. Die genannten Elemente könnte z.B. durch eine elektronische Stabilitätskontrolle (ESC - Electronic Stability Control) bereitgestellt sein.

Jede Radbremse 4 kann eine Bremsscheibe 6 und einen Bremssattel 7 mit Bremsbelägen 8 aufweisen, wobei die Bremsbeläge 8 in bekannter Weise durch die Steuereinheit 5 über die Bremskreisläufe 6 gegen die Bremsscheibe 7 gedrückt werden können.

Das Kraftfahrzeug 1 kann des Weiteren eine Kollisionsdetektionseinrichtung 11 aufweisen, die beispielsweise auf der Grundlage einer Prozessoreinrichtung, beispielsweise eines Mikroprozessors oder Mikrocontrollers, realisiert sein kann. Die Kollisionsdetektionseinrichtung 11 kann auf der Grundlage von Sensordaten 12 einer Sensoreinrichtung 13 beispielsweise eine digitale Umfeldkarte 14 einer Umgebung oder eines Fahrzeugumfelds 15 des Kraftfahrzeugs 1 erzeugen und hieraus ermitteln, ob eine Kollision des Kraftfahrzeugs 1 mit einem fahrzeugexternen Objekt bevorsteht. Für diesen Fall kann durch die Kollisionsdetektionseinrichtung 11 eine Bremsanforderung 16 an das Bremssystem 3 ausgesendet werden.

Die Bremsanforderung 16 kann beispielsweise als digitale Nachricht über ein Bussystem 17, beispielsweise einen CAN-Bus, an das Bremssystem 3 übertragen werden. Das Bremssystem 3 erzeugt dann mittels der Radbremsen 4 in Abhängigkeit von dem Anforderungssignal 16 das beschriebene Bremsmoment zur Verringerung der Fahrgeschwindigkeit V. Hierdurch wird durch das Zusammenspiel der Kollisionsdetektionseinrichtung 11 und des Bremssystems 3 eine Selbstbremsung des Kraftfahrzeugs 1 ohne ein Zutun eines Fahrers des Kraftfahrzeugs 1 durchgeführt.

Bei dem Kraftfahrzeug 1 ist dabei sichergestellt, dass die Erzeugung des Bremsmoments, das heißt die Geschwindigkeitsverringerung, zu einem von der Kollisionsdetektionseinrichtung 11 berechneten TTB-Bremszeitpunkt, das heißt einer TTB (Time To Break) beginnt, obwohl ausgehend von einem Bereitschaftszustand des Bremssystems zunächst eine Totlaufzeit TL vergehen muss, um ausgehend von dem Bereitschaftszustand die Bremsbeläge 9 an die Bremsscheiben 7 heranzubewegen und/oder einen ausreichend großen Bremsdruck in den Bremskreisläufen 6 zu erzeugen.

Hierzu kann das Kraftfahrzeug 1 in einer von zwei im Folgenden beschriebenen Ausführungen ausgestaltet sein. Allgemein wird ein Zeitwert 18 der Totlaufzeit TL in der Kollisionsdetektionseinrichtung 11 und/oder dem Bremssystem 3 bereitgestellt und dieser Zeitwert 18 beim Aktivieren oder Betätigen der Radbremsen 4 berücksichtigt.

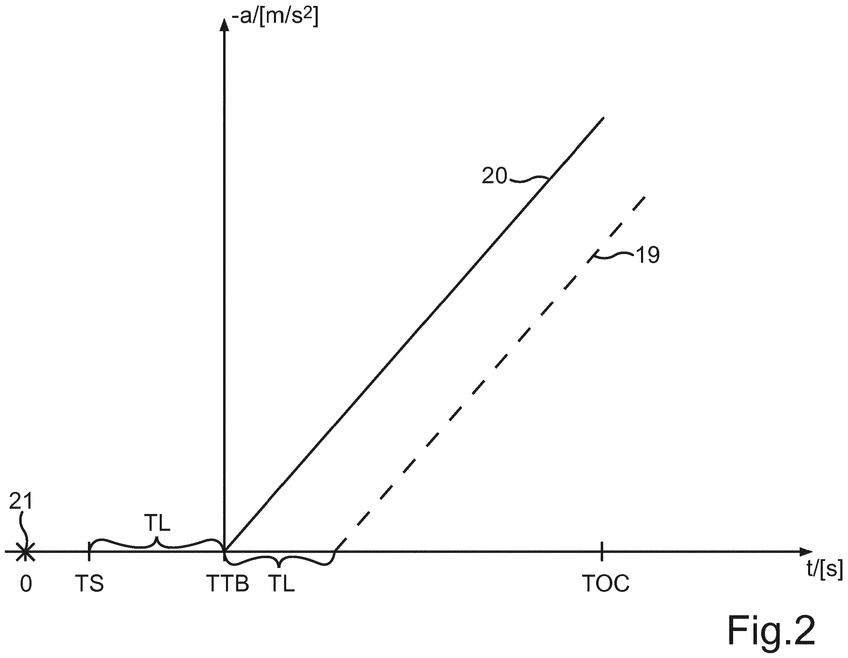

Dies ist im Folgenden anhand von Fig. 2 genauer erläutert. Fig. 2 zeigt Zeitverläufe 19, 20 der Fahrzeugverzögerung -a ("minus a"), das heißt der negativen Beschleunigung a, durch welche die Fahrgeschwindigkeit V des Kraftfahrzeugs 1 aufgrund des Bremsmoments verringert wird. Die Verläufe sind über der Zeit t aufgetragen.

Der aus dem Stand der Technik bekannte Fall ist durch den Zeitverlauf 19 repräsentiert. Die Kollisionsdetektionseinrichtung 11 sendet zum gewünschten TTB-Bremszeitpunkt TTB die Bremsanforderung 16 aus. Das Bremssystem 3 erzeugt daraufhin in den Bremsleitungen 6 den Bremsdruck, durch welchen die Bremsbeläge 9 an die Bremsscheiben 7 heranbewegt und dann gegen die Bremsscheiben 7 gedrückt werden. Damit ausgehend von der Ruhestellung der Bremsbeläge 9 das erste Mal das Bremsmoment erzeugt wird, vergeht die Totlaufzeit TL, sodass vom gewünschten TTB-Bremszeitpunkt bis zur ersten Verzögerung des Kraftfahrzeugs 1 die Totlaufzeit TL vergeht und sich erst ab dann der Zeitverlauf 19 der Fahrzeugverzögerung -a ergibt.

Gemäß einer Ausführungsform kann nun die Kollisionsdetektionseinrichtung 11 ausgehend von einem aktuellen Zeitpunkt 21 die Bremsanforderung 16 zu einem Startzeitpunkt TS an das Bremssystem 3 aussenden. Der Startzeitpunkt TS ergibt sich aus dem TTB-Bremszeitpunkt abzüglich des Zeitwerts 18 der Totlaufzeit TL. Das Bremssystem 3 kann somit in der herkömmlichen Weise auf die Bremsanforderung 16 reagieren. Da zunächst die Totlaufzeit TL vergeht, bis das erste Mal das Bremsmoment erzeugt wird, wird dieses somit erst zum TTB-Bremszeitpunkt erzeugt und von dort dann kontinuierlich durch weiteres Anpressen der Bremsbeläge 9 an die Bremsscheiben 7 vergrößert, sodass sich der Zeitverlauf 20 ergibt. Den TTB-Bremszeitpunkt kann die Kollisionsdetektionseinrichtung in an sich bekannter Weise aus einem Kollisionszeitpunkt TOC beispielsweise anhand der digitalen Umfeldkarte 14 und der aktuellen Fahrgeschwindigkeit V ermitteln.

Alternativ zum beschriebenen Aussenden der Bremsanforderung 16 zum Startzeitpunkt TS kann die Kollisionsdetektionseinrichtung 11 auch in einer Vorabnachricht 22 den TTB-Bremszeitpunkt dem Bremssystem 3 mitteilen. Das Bremssystem 3, beispielsweise das Bremssteuergerät ECU, kann dann ausgehend von der Vorabnachricht 22 mit der Information über den TTB-Bremszeitpunkt selbst den Startzeitpunkt TS berechnen und mit der Betätigung der Radbremsen 11 zum Startzeitpunkt TS beginnen, obwohl noch keine Bremsanforderung 16 empfangen worden ist. Hierzu ist der Zeitwert 18 der Totlaufzeit TL in der Kollisionsdetektionseinrichtung 11 bereitzustellen. Trifft die Bremsanforderung 16 dann zum TTB-Bremszeitpunkt aus der Kollisionsdetektionseinrichtung 11 in dem Bremssystem 3 ein, so befinden sich die Bremsbeläge 9 bereits in Bewegung und berühren gerade eben die Bremsscheiben 7. Damit ergibt sich ebenfalls der Zeitverlauf 20 der Fahrzeugverzögerung.

Bei dem Kraftfahrzeug 1 wird es somit der Kollisionsdetektionseinrichtung 11 oder dem Bremssystem 3 überlassen, wann das Bremssystem für eine Notbremsung oder Selbstbremsung vorkonditioniert wird. Dazu wird entsprechend der Zeitwert 18 für die Totlaufzeit TL bereitgestellt und ausgehend von dem TTB-Bremszeitpunkt, zu welchem die Notbremsung beginnen soll, der Startzeitpunkt TS entweder durch die Kollisionsdetektionseinrichtung 11 oder das Bremssystem 3 ermittelt. Zum Startzeitpunkt TS kann dann entweder durch die Kollisionsdetektionseinrichtung die Bremsanforderung 16 verfrüht ausgesendet werden oder es kann der TTB-Bremszeitpunkt als Vorabnachricht 22 dem Bremssystem 3 mitgeteilt werden, sodass sich das Bremssystem 3 selbst vorkonditionieren kann.

In diesem Fall ergibt sich dann der folgende Ablauf:
1. Der Notbremsassistent, das heißt die Kollisionsdetektionseinrichtung 11, überwacht die Objekte in der Fahrzeugumgebung 15. Wird mit einem Objekt ein Kollisionskurs festgestellt, wird eine Time-To-Collision TOC berechnet.
2. Von dieser TOC wird vom Notbremsassistenten die Time-To-Break TTB als TTB-Bremszeitpunkt abgeleitet und in der Vorabnachricht 22 an das Bremssystem 3 beispielsweise über den Datenbus 17 übertragen.
3. Das Bremssystem ermittelt ab Empfang des TTB-Bremszeitpunkts anhand seiner spezifizierten Systemeigenschaften den idealen Zeitpunkt zur Vorbereitung (Konditionierung) des Bremssystems 3, beispielsweise für einen Anlauf der Hydraulikpumpe 10 und/oder einen Anlauf des eBKV-Bremskolbens. Die entscheidende Systemeigenschaft ist hierbei der Zeitwert 18 der Totlaufzeit TL. Der ideale Zeitpunkt ist der Startzeitpunkt TS.
4. Die Vorkonditionierung ist seitens des Bremssystems 3 so auszulegen, dass ab Erreichen des TTB-Bremszeitpunkts ohne Zeitverzögerung sofort der Aufbau der angeforderten Fahrzeugverzögerung beginnen kann.
5. Der Notbremsassistent fordert ab Erreichen des TTB-Bremszeitpunkts mittels der Bremsanforderung 16 die einzustellende Soll-Verzögerung an.

Zur Anwendung der Reduzierung der Totlaufzeit TL im Bremssystem 3 bei Notbremsungen durch Übermittlung des TTB-Bremszeitpunkts wird im Kraftfahrzeug 1 bevorzugt folgendes System installiert:
1. Ein Steuergerät für den Notbremsassistenten, das heißt die Kollisionsdetektionseinrichtung 11, die mit geeigneten Sensoren (zum Beispiel Front-Radar, Kamera) der Sensoreinrichtung 13 zur Detektion von Objekten und Messung der TOC und zur Berechnung des TTB-Bremszeitpunkts eingerichtet ist.
2. Ein Bremssystem 3 mit aktivem (über das Bremssteuergerät ECU steuerbaren) Bremsmomentaufbau, das heißt beispielsweise mit einem eBKV, und einer Regelung der Notbremsung zum Einstellung der Soll-Verzögerung gemäß der Bremsanforderung 16.

Insgesamt zeigt das Beispiel, wie durch die Erfindung in einem Kraftfahrzeug-Bremssystemen durch Übermittlung des geplanten Bremszeitpunktes bei Notbremsungen eine Totlaufzeit des Bremssystems reduziert werden kann.

### Bezugszeichenliste

- 1: Kraftfahrzeug
- 2: Rad
- 3: Bremssystem
- 4: Radbremse
- 5: Steuereinheit
- 6: Hydraulischer Bremskreislauf
- 7: Bremsscheibe
- 8: Bremssattel
- 9: Bremsbelag
- 10: Hydraulikpumpe
- 11: Kollisionsdetektionseinrichtung
- 12: Sensordaten
- 13: Sensoreinrichtung
- 14: Digitale Umfeldkarte
- 15: Fahrzeugumfeld
- 16: Bremsanforderung
- 17: Kommunikationseinrichtung
- 18: Zeitdauerwert
- 19: Zeitverlauf
- 20: Zeitverlauf
- 21: Aktueller Zeitpunkt
- 22: Vorabnachricht

- ECU: Bremssteuergerät
- eBKV: Bremskraftverstärker
- TOC: Kollisionszeitpunkt
- TTB: TTB-Bremszeitpunkt
- V: Fahrgeschwindigkeit

## Patentansprüche

1. Verfahren zum Steuern einer Selbstbremsung eines Kraftfahrzeugs (1), wobei
- eine Kollisionsdetektionseinrichtung (11) eine bevorstehende Kollision des Kraftfahrzeugs (1) prädiziert und für die Selbstbremsung einen TTB-Bremszeitpunkt (TTB) ermittelt, zu welchem die Selbstbremsung beginnen soll, und
- ein Bremssystem (3) in einem Bereitschaftszustand betrieben wird, in welchem es auf eine Bremsanforderung (16) der Kollisionsdetektionseinrichtung (11) mit einer Betätigung von Radbremsen (4) des Kraftfahrzeugs (1) reagiert, wobei das Bremssystem (3) hierbei eine Totlaufzeit (TL) benötigt, um ausgehend von dem Bereitschaftszustand für die durch die Bremsanforderung (16) angeforderte Selbstbremsung zum ersten Mal ein Bremsmoment mittels der Radbremsen (4) zu erzeugen, wobei ein Zeitdauerwert (18) der Totlaufzeit (TL) des Bremssystems (3) in dem Kraftfahrzeug (1) bereitgestellt wird und ausgehend von dem Bereitschaftszustand des Bremssystems (3) bei Erkennen der bevorstehenden Kollision die Radbremsen (4) zu einem Startzeitpunkt (TS) betätigt werden, wobei der Startzeitpunkt (TS) dem TTB-Bremszeitpunkt (TTB) abzüglich des Zeitdauerwerts (18) der Totlaufzeit (TL) entspricht, dadurc
h gekennzeichnet, dass
die Bremsbeläge (9) zum TTB-Bremszeitpunkt (TTB) in Bewegung gehalten werden.

2. Verfahren nach Anspruch 1, wobei die Selbstbremsung gestartet wird, indem die Kollisionsdetektionseinrichtung (11) die Bremsanforderung (16) zum Startzeitpunkt (TS) aussendet.

3. Verfahren nach Anspruch 1, wobei die Selbstbremsung gestartet wird, indem die Kollisionsdetektionseinrichtung (11) den TTB-Bremszeitpunkt (TTB) vor der Bremsanforderung (16) an das Bremssystem (3) signalisiert und das Bremssystem (3) zum Startzeitpunkt (TS) die Radbremsen (4) ohne die Bremsanforderung (16) zu betätigen beginnt.

4. Verfahren nach Anspruch 3, wobei das Bremssystem (3) die Selbstbremsung bei Ausbleiben der Bremsanforderung (16) zum TTB-Bremszeitpunkt (TTB) abbricht.

5. Verfahren nach einem der vorhergehenden Ansprüche, wobei während der Totlaufzeit (TL) die Bremsbeläge (9) der Radbremsen (4) aus einer Ruhestellung heraus auf Bremsscheiben (7) der Radbremsen (4) zu beschleunigt werden.

6. Verfahren nach einem der vorhergehenden Ansprüche, wobei während der Totlaufzeit (TL) eine Pumpe (10) zum Bereitstellen eines Bremsdrucks für die Selbstbremsung anläuft und/oder ein Bremskolben eines elektro-mechanischen Bremskraftverstärkers (eBKV) beschleunigt wird.

7. Verfahren nach einem der vorhergehenden Ansprüche, wobei durch die Kollisionsdetektionseinrichtung (11) auf der Grundlage einer digitalen Umfeldkarte (14) ein TOC-Kollisionszeitpunkt (TOC) der Kollision prädiziert und daraus der TTB-Bremszeitpunkt (TTB), zu welchem spätestens die Selbstbremsung beginnen muss, um die Kollision durch die Selbstbremsung zu vermeiden oder auf ein vorbestimmtes Schadensmaß zu begrenzen, ermittelt wird.

8. Steuervorrichtung (3, 11) für ein Kraftfahrzeug (1), welche dazu eingerichtet ist, für eine Selbstbremsung aus einem TTB-Bremszeitpunkt (TTB) und einem Zeitdauerwert (18) einer Totlaufzeit (TL) eines Bremssystems (3) des Kraftfahrzeug (1) einen Startzeitpunkt (TS), ab welchem das Bremssystem (3) aus einem Bereitschaftszustand heraus Radbremsen (4) des Kraftfahrzeugs (1) betätigt, zu ermitteln und die Radbremsen (4) schon ab dem Startzeitpunkt (TS) zu betätigen, so dass die Radbremsen (4) zum TTB-Bremszeitpunkt (TTB) beginnen, ein Bremsmoment zu erzeugen, und dabei dynamisch in Bewegung sind, wobei die Steuervorrichtung (3, 11) hierzu ein Verfahren nach einem der vorhergehenden Ansprüche durchzuführen eingerichtet ist.

9. Kraftfahrzeug (1) mit einem Bremssystem (3) und einer Kollisionsdetektionseinrichtung (11),
**dadurch gekennzeichnet, dass**
durch das Bremssystem (3) und/oder durch die Kollisionsdetektionseinrichtung (11) eine Steuervorrichtung (3, 11) nach Anspruch 8 bereitgestellt ist.

## Claims

1. Method for controlling a self-braking operation of a motor vehicle (1),
- a collision detection device (11) predicting an imminent collision of the motor vehicle (1) and determining a TTB brake time (TTB) for the self-braking operation, at which TTB brake time (TTB) the self-braking operation is to begin, and
- a brake system (3) being operated in a standby mode, in which it reacts to a brake request (16) of the collision detection device (11) with an actuation of wheel brakes (4) of the motor vehicle (1), the brake system (3) requiring a dead travel time (TL) here, in order, starting from the standby mode, to generate a brake torque by means of the wheel brakes (4) for the first time for the self-braking operation which is requested by way of the brake request (16),
a time duration value (18) of the dead travel time (TL) of the brake system (3) in the motor vehicle (1) being provided and, starting from the standby mode of the brake system (3), the wheel brakes (4) being actuated at a start time (TS) in the case of the detection of the imminent collision, the start time (TS) corresponding to the TTB brake time (TTB) minus the time duration value (18) of the dead travel time (TL),
**characterized in that**
the brake linings (9) are kept in motion at the TTB brake time (TTB).

2. Method according to Claim 1, the self-braking operation being started by the collision detection device (11) outputting the brake request (16) at the start time (TS) .

3. Method according to Claim 1, the self-braking operation being started by the collision detection device (11) signalling the TTB brake time (TTB) before the brake request (16) to the brake system (3), and the brake system (3) beginning to actuate the wheel brakes (4) at the start time (TS) without the brake request (16).

4. Method according to Claim 3, the brake system (3) cancelling the self-braking operation in the case of the absence of the brake request (16) at the TTB brake time (TTB) .

5. Method according to one of the preceding claims, the brake linings (9) of the wheel brakes (4) being accelerated out of a rest position towards brake discs (7) of the wheel brakes (4) during the dead travel time (TL) .

6. Method according to one of the preceding claims, a pump (10) for the provision of a brake pressure for the self-braking operation starting up and/or a brake piston of an electromechanical brake booster (eBKV) being accelerated during the dead travel time (TL).

7. Method according to one of the preceding claims, a TOC collision time (TOC) of the collision being predicted by way of the collision detection device (11) on the basis of a digital surroundings map (14), and the TTB brake time being determined therefrom, at which TTB brake time at the latest the self-braking operation has to begin, in order to avoid the collision by way of the self-braking operation or to limit the said collision to a predetermined damage extent.

8. Control apparatus (3, 11) for a motor vehicle (1), which control apparatus (3, 11) is set up to determine a start time (TS) for a self-braking operation from a TTB brake time (TTB) and a time duration value (18) of a dead travel time (TL) of a brake system (3) of the motor vehicle (1), from which start time (TS) the brake system (3) actuates wheel brakes (4) of the motor vehicle (1) out of a standby state, and to already actuate the wheel brakes (4) from the start time (TS), with the result that the wheel brakes (4) begin to generate a brake torque at the TTB brake time (TTB), and are dynamically in motion here, the control apparatus (3, 11) being set up to this end to carry out a method according to one of the preceding claims.

9. Motor vehicle (1) with a brake system (3) and a collision detection device (11), **characterized in that** a control apparatus (3, 11) according to Claim 8 is provided by way of the brake system (3) and/or by way of the collision detection device (11).

## Revendications

1. Procédé de commande d'un autofreinage d'un véhicule automobile (1), selon lequel
- un dispositif de détection de collision (11) prédit une collision imminente du véhicule automobile (1) et détermine pour l'autofreinage un instant de freinage TTB (TTB) auquel l'autofreinage doit commencer, et
- un système de freinage (3) fonctionne dans un état de disponibilité dans lequel il réagit à une demande de freinage (16) du dispositif de détection de collision (11) par un actionnement des freins de roue (4) du véhicule automobile (1), le système de freinage (3) nécessitant ici un temps mort (TL) pour, à partir de l'état de disponibilité, générer pour la première fois un moment de freinage au moyen des freins de roue (4) pour l'autofreinage demandé par la demande de freinage (16), une valeur de durée (18) du temps mort (TL) du système de freinage (3) étant fournie dans le véhicule automobile (1) et les freins de roue (4) étant actionnés à un instant de départ (TS) à partir de l'état de disponibilité du système de freinage (3) en cas de reconnaissance d'une collision imminente, l'instant de départ (TS) correspondant à l'instant de freinage TTB (TTB) moins la valeur de durée (18) du temps mort (TL),
**caractérisé en ce que** les garnitures de frein (9) sont maintenues en mouvement à l'instant de freinage TTB (TTB).

2. Procédé selon la revendication 1, l'autofreinage étant démarré par le fait que le dispositif de détection de collision (11) émet la demande de freinage (16) à l'instant de départ (TS).

3. Procédé selon la revendication 1, l'autofreinage étant démarré par le fait que le dispositif de détection de collision (11) signale l'instant de freinage TTB (TTB) avant la demande de freinage (16) au système de freinage (3) et le système de freinage (3) commence à actionner les freins de roue (4) à l'instant de départ (TS) sans la demande de freinage (16).

4. Procédé selon la revendication 3, le système de freinage (3) interrompant l'autofreinage en l'absence de la demande de freinage (16) à l'instant de freinage TTB (TTB) .

5. Procédé selon l'une des revendications précédentes, les garnitures de frein (9) des freins de roue (4), pendant le temps mort (TL), étant accélérées depuis une position de repos vers des disques de frein (7) des freins de roue (4).

6. Procédé selon l'une des revendications précédentes, selon lequel, pendant le temps mort (TL), une pompe (10) destinée à fournir une pression de freinage pour l'autofreinage démarre et/ou un piston de frein d'un servofrein électromécanique (eBKV) est accéléré.

7. Procédé selon l'une des revendications précédentes, un instant de collision TOC (TOC) de la collision étant prédit par le dispositif de détection de collision (11) sur la base d'une carte d'environnement numérique (14) et un instant de freinage TTB (TTB), auquel l'autofreinage doit commencer au plus tard afin d'éviter la collision par l'autofreinage ou la limiter à une étendue des dommages prédéterminée, étant déterminé.

8. Arrangement de commande (3, 11) pour un véhicule automobile (1), lequel est conçu pour déterminer, pour un autofreinage à partir d'un instant de freinage TTB (TTB) et une valeur de durée (18) d'un point mort (TL) d'un système de freinage (3) du véhicule automobile (1), un instant de départ (TS) à partir duquel le système de freinage (3) actionne les freins de roue (4) du véhicule automobile (1) à partir d'un état de disponibilité, et actionner les freins de roue (4) déjà à partir de l'instant de départ (TS) de sorte que les freins de roue (4) commencent à générer un moment de freinage à l'instant de freinage TTB (TTB) et se trouvent ainsi dynamiquement en mouvement, l'arrangement de commande (3, 11) étant conçu pour, à cet effet, mettre en œuvre un procédé selon l'une des revendications précédentes.

9. Véhicule automobile (1) comprenant un système de freinage (3) et un dispositif de détection de collision (11), **caractérisé en ce qu'**un arrangement de commande (3, 11) selon la revendication 8 est fourni par le système de freinage (3) et/ou par le dispositif de détection de collision (11).
